# EUROPEAN PATENT APPLICATION

(11) **EP 4 160 105 A1**
(43) Date of publication of application: **05.04.2023**
(21) Application number: 20939049.1
(22) Date of filing: 02.06.2020
(51) Int. Cl.: F24F 11/79, F24F 120/12

(54) **ENVIRONMENT CONTROL SYSTEM**

(71) Applicant: MITSUBISHI ELECTRIC CORPORATION, Chiyoda-ku Tokyo 100-8310 (JP)
(72) Inventor: HISANO, Kohei, Tokyo 100-8310 (JP); ORITO, Mari, Tokyo 100-8310 (JP); FURUHASHI, Takuya, Tokyo 100-8310 (JP); FUSHIE, Ryo, Tokyo 100-8310 (JP); MINEZAWA, Satoshi, Tokyo 100-8310 (JP); HARAMAKI, Marika, Tokyo 100-8310 (JP)
(74) Representative: Pfenning, Meinig & Partner mbB
(86) International application number: PCT/JP2020/021829
(87) International publication number: WO 2021/245811

(57) **Abstract**

An environment control system includes a louver (20a), a motor (21), a temperature sensor (40), a determination unit (53), and a control unit (55). The determination unit (53) determines a position of a person in a particular area on the basis of data of surface temperatures detected by the temperature sensor (40). The control unit (55) controls the motor (21) in such a manner that an angular velocity of the louver (20a) becomes smaller as the position determined by the determination unit (53) is farther from the outlet (18b) when air from an outlet (18b) is blown toward the position.

## Description

### FIELD

The present disclosure relates to an environment control system.

### BACKGROUND

PTL 1 discloses an air conditioner. The air conditioner disclosed in PTL 1 includes a sensor for detecting a person. A period in which rotation of a louver is stopped is adjusted in accordance with a position and a temperature of the person detected by the sensor.

### Citation List

### Patent Literature

[PTL 1] JP 2017-58062 A

### SUMMARY

### Technical Problem

In the air conditioner disclosed in PTL 1, the louver is stopped so that air is blown toward a particular person. Thus, there is a case where too much air is blown toward a person near an outlet. Further, as a result of the louver being stopped, a period from when air is not blown toward a person until when air is blown toward the person next becomes longer.

The present disclosure is made to solve the problems as described above. An object of the present disclosure is to provide an environment control system capable of reducing lack of uniformity in air blowing including too much air blowing and too little air blowing.

### Solution to Problem

An environment control system according to the present disclosure comprises a louver configured to change a direction of air blown from an outlet, a motor configured to rotatively drive the louver, a sensor configured to detect surface temperatures of objects existing in a particular area, determination means for determining a position of a person in the area on a basis of data of the surface temperatures detected by the sensor, and control means for controlling the motor in such a manner that an angular velocity of the louver becomes smaller as the position determined by the determination means is farther from the outlet when air from the outlet is blown toward the position.

An environment control system according to the present disclosure comprises a louver configured to change a direction of air blown from an outlet, a motor configured to rotatively drive the louver, a sensor configured to detect surface temperatures of objects existing in a particular area, the particular area divided into a plurality of detection areas, determination means for determining the number of persons existing in each of the plurality of detection areas on a basis of data of the surface temperatures detected by the sensor, and control means for controlling the motor in such a manner that an angular velocity of the louver becomes smaller as air from the outlet is blown toward a detection area farther from the outlet, if the same number of persons exists in each of the plurality of detection areas. The control means controls the motor in such a manner that, in each of the plurality of detection areas, the angular velocity of the louver becomes smaller as the number determined by the determination means is larger.

An environment control system according to the present disclosure comprises a louver configured to change a direction of air blown from an outlet, a motor configured to rotatively drive the louver, determination means for determining a position of a person in a particular area on a basis of a wireless signal received from a mobile terminal, and control means for controlling the motor in such a manner that an angular velocity of the louver becomes smaller as the position determined by the determination means is farther from the outlet when air from the outlet is blown toward the position.

An environment control system according to the present disclosure comprises a louver configured to change a direction of air blown from an outlet, a motor configured to rotatively drive the louver, determination means for determining the number of persons existing in each of a plurality of detection areas on a basis of wireless signals received from mobile terminals, and control means for controlling the motor in such a manner that an angular velocity of the louver becomes smaller as air from the outlet is blown toward a detection area farther from the outlet, if the same number of persons exists in each of the plurality of detection areas. The control means controls the motor in such a manner that, in each of the plurality of detection areas, the angular velocity of the louver becomes smaller as the number determined by the determination means is larger.

### Advantageous Effects of Invention

In an environment control system according to the present disclosure, a position of a person is determined by determination means. Control means controls a motor in such a manner that an angular velocity of a louver becomes smaller as the position determined by the determination means is farther from an outlet when air from the outlet is blown toward the position. According to the environment control system according to the present disclosure, it is possible to reduce lack of uniformity in air blowing including too much air blowing and too little air blowing.

### BRIEF DESCRIPTION of DRAWINGS

Figure 1 is a diagram illustrating an example of an environment control system in Embodiment 1.
Figure 2 is a diagram illustrating the example of the environment control system in Embodiment 1.
Figure 3 is a perspective view illustrating an example of an indoor unit of an air conditioner.
Figure 4 is a perspective view illustrating an internal structure of the indoor unit.
Figure 5 is a flowchart illustrating an operation example of the environment control system in Embodiment 1.
Figure 6 is a diagram illustrating a setting example of detection areas.
Figure 7 is a diagram illustrating another setting example of the detection areas.
Figure 8 is a flowchart illustrating another example of control of a direction of air by a control unit.
Figure 9 is a flowchart illustrating another example of control of a direction of air by the control unit.
Figure 10 is a flowchart illustrating another example of control of a direction of air by the control unit.
Figure 11 is a flowchart illustrating another operation example of the environment control system.
Figure 12 is a diagram illustrating an example of a hardware resource of a controller.
Figure 13 is a diagram illustrating another example of the hardware resource of the controller.

### DESCRIPTION of EMBODIMENTS

Detailed description will be provided below with reference to the drawings. Redundant description will be simplified or omitted as appropriate. In the drawings, the same reference numerals indicate the same portions or corresponding portions.

### Embodiment 1

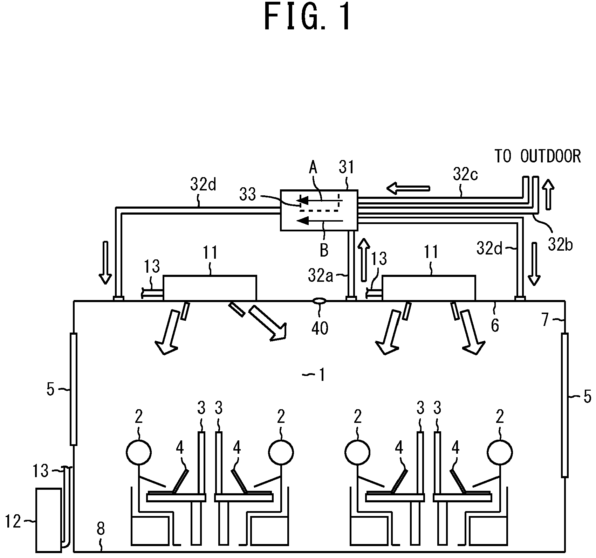

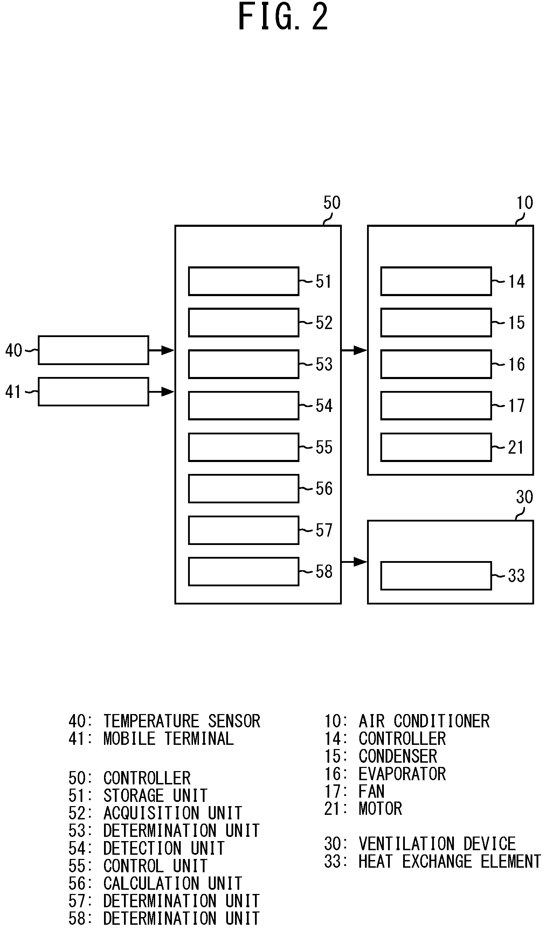

Fig. 1 and Fig. 2 are diagrams illustrating an example of an environment control system in Embodiment 1. Fig. 1 illustrates an example where the environment control system is applied to control an environment of a room 1. As an example, the room 1 is a room of an office building. In the room 1, a plurality of employees 2 work. The employees 2 are examples of persons in the room 1. There may be one employee 2 in the room 1.

The employees 2 operate PCs 4 at desks 3. The PCs 4 are examples of OA equipment existing in the room 1. Other than the PCs 4, printers and multifunction printers may exist in the room 1 as OA equipment. Fig. 1 illustrates an example where there are windows 5 in the room 1. If it is sunny, sunlight comes in the room 1 from the windows 5.

The environment control system includes an air conditioner 10, a ventilation device 30, a temperature sensor 40, and a controller 50.

The air conditioner 10 performs air heating operation for heating the room 1, air cooling operation for cooling the room 1, and air blowing operation for sending air to the room 1. In the air heating operation, hot air is sent from the air conditioner 10 to the room 1. In the air cooling operation, cold air is sent from the air conditioner 10 to the room 1. In the air blowing operation, air at room temperature is sent from the air conditioner 10 to the room 1.

The air conditioner 10 includes indoor units 11 and an outdoor unit 12. The indoor units 11 are connected to the outdoor unit 12 through pipes 13. The air conditioner 10 includes a controller 14 for controlling operation. Further, the air conditioner 10 includes a refrigeration cycle. The refrigeration cycle includes a compressor, a four-way valve, a condenser 15, an expansion valve, and an evaporator 16. Each equipment of the refrigeration cycle such as the compressor and the expansion valve is controlled by the controller 14. Refrigerant flows through the pipes 13 and is sent to each equipment of the refrigeration cycle. Further, each of the indoor units 11 include a fan 17. The fan 17 is controlled by the controller 14.

In the example illustrated in Fig, 1, the air conditioner 10 includes two indoor units 11. The air conditioner 10 may include only one indoor unit 11 or may include three or more indoor units 11. The indoor units 11 are provided on a ceiling 6 of the room 1. The indoor units 11 may be provided on walls 7 of the room 1. The indoor units 11 may be placed on a floor 8 of the room 1.

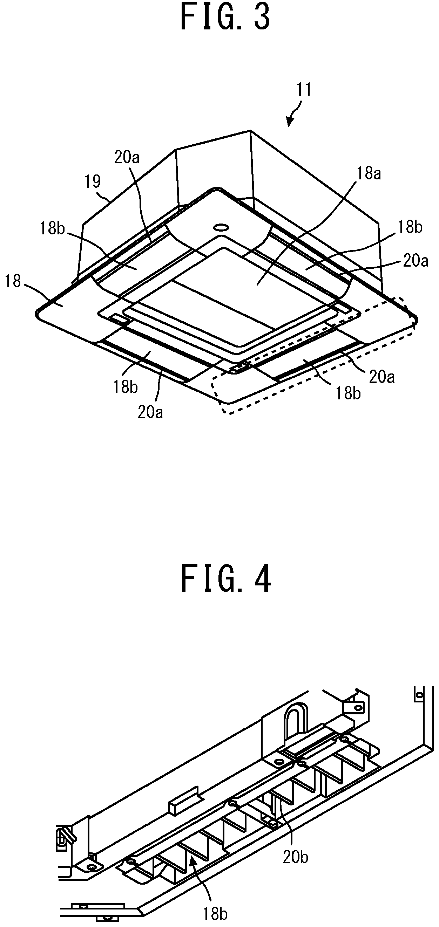

Fig. 3 is a perspective view illustrating an example of the indoor unit 11 of the air conditioner 10. The indoor unit 11 includes a panel 18 on which an inlet 18a and an outlet 18b are formed. If the fan 17 is driven, air in the room 1 is sucked into a chassis 19 from the inlet 18a. The chassis 19 houses a heat exchanger. The air sucked from the inlet 18a exchanges heat with the refrigerant when the air passes through the heat exchanger inside the chassis 19.

In the air cooling operation, the heat exchanger inside the chassis 19 is the evaporator 16. The air sucked from the inlet 18a is cooled by heat exchange with the refrigerant when the air passes through the evaporator 16. The air cooled by the evaporator 16 is blown to the room 1 from the outlet 18b by the fan 17. In the air cooling operation, the heat exchanger, that is, the evaporator 16 inside the chassis 19 functions as a cooler.

In the air heating operation, the heat exchanger inside the chassis 19 is the condenser 15. The air sucked from the inlet 18a is heated by heat exchange with the refrigerant when the air passes through the condenser 15. The air heated by the condenser 15 is blown to the room 1 from the outlet 18b by the fan 17. In the air heating operation, the heat exchanger, that is, the condenser 15 inside the chassis 19 functions as a heater.

Fig. 3 illustrates an example where the inlet 18a is formed at a central portion of the panel 18. Further, Fig. 3 illustrates an example where four outlets 18b are formed along edges of the panel 18 so as to surround a circumference of the inlet 18a. The number and positions of the inlets 18a and the number and positions of the outlets 18b are not limited to the example illustrated in Fig. 3.

Fig. 4 is a perspective view illustrating an internal structure of the indoor unit 11. The indoor unit 11 includes louvers 20a and 20b for determining a direction of air blown from the outlet 18b. The louvers 20a and 20b have a sheet shape. The outlet 18b has a rectangular shape having a long side in a direction along an edge of the panel 18. The louver 20a can rotate around an axis parallel to a direction along the edge of the panel 18. Fig. 4 illustrates a structure on an inner side of the outlet 18b. In Fig. 4, illustration of the louver 20a is omitted. The louver 20b can rotate around an axis orthogonal to the direction along the edge of the panel 18.

The indoor unit 11 includes a motor 21 configured to rotatively drive the louvers 20a and 20b. The indoor unit 11 may include a plurality of motors 21. For example, the indoor unit 11 includes a first motor configured to rotatively drive the louver 20a and a second motor configured to rotatively drive the louver 20b as the motors 21. In the example illustrated in Fig. 3, four outlets 18b are formed on the panel 18, and thus, the indoor unit 11 includes four first motors and four second motors.

The motor 21 is controlled by the controller 14. A direction of air blown from the outlet 18b is determined by an angle of the louver 20a and an angle of the louver 20b being controlled by the controller 14. In the example illustrated in the present embodiment, the louver 20a and the louver 20b are examples of means for changing the direction of the air blown from the outlet 18b. Specifically, air can be sent from each outlet 18b in any direction by changing a combination of the angle of the louver 20a and the angle of the louver 20b. Note that it is also possible to employ a configuration where the louver 20a can completely close the outlet 18b.

The temperature sensor 40 detects a surface temperature of an object in a noncontact manner. Fig. 1 illustrates an example where the temperature sensor 40 is provided on the ceiling 6 of the room 1. In a case where a plurality of indoor units 11 are provided on the ceiling 6 as in the example illustrated in the present embodiment, the temperature sensor 40 is preferably provided at a central portion of the ceiling 6. The temperature sensor 40 may be provided on the wall 7 of the room 1. The temperature sensor 40 may be provided in the indoor unit 11 of the air conditioner 10.

In the example illustrated in Fig. 1, the temperature sensor 40 detects surface temperatures of objects existing in a particular area in the room 1. An area in which the temperature sensor 40 detects surface temperatures is set in advance. In the example illustrated in Fig. 1, the area in which the temperature sensor 40 detects surface temperatures preferably includes the whole of the floor 8.

As an example, the temperature sensor 40 includes a plurality of thermopiles arranged in line. Each thermopile can individually receive infrared light and detect a temperature. The temperature sensor 40 scans the area with the plurality of thermopiles. By this means, surface temperatures of objects existing in the area are detected.

The temperature sensor 40 is an example of means for detecting a surface temperature of an object. The temperature sensor 40 may include an uncooled infrared image sensor of SOI (silicon on insulator) diode type. In such a case, a silicon diode is used in the image sensor.

The ventilation device 30 is a device configured to ventilate the room 1. The ventilation device 30 takes in outside air to the room 1 and discharges air in the room 1 to outside of the room 1.

The ventilation device 30 includes a body 31 and ducts 32a to 32d connected to the body 31. The duct 32a is a discharge duct to guide air in the room 1 to the body 31. The duct 32a opens on the ceiling 6. The duct 32b is a discharge duct to guide air sucked from the room 1, from the body 31 to outdoor. The duct 32c is an intake duct to guide outside air to the body 31. The duct 32d is an intake duct to guide outside air sucked into the body 31, from the body 31 to the room 1. The duct 32d opens on the ceiling 6. Further, the body 31 includes a heat exchange element 33.

The ventilation device 30 can perform first ventilation operation and second ventilation operation. The first ventilation operation is operation for ventilating the room 1 while performing heat exchange between outside air to be taken into the room 1 and air to be discharged from the room 1. In the first ventilation operation, the air taken into the body 31 flows through an airflow path A. In the airflow path A, the outside air taken into the body 31 and the air from the room 1 exchanges heat each other when passing through the heat exchange element 33.

The second ventilation operation is operation for ventilating the room 1 without performing heat exchange between outside air to be taken into the room 1 and air to be discharged from the room 1. In the second ventilation operation, air taken into the body 31 flows through an airflow path B. In the airflow path B, the air from the room 1 and the outside air do not pass through the heat exchange element 33. For example, a dumper for switching the path between the airflow path A and the airflow path B is included in the body 31.

The controller 50 controls the air conditioner 10. The controller 50 may control both the air conditioner 10 and the ventilation device 30. As an example, the controller 50 is provided in the indoor unit 11 of the air conditioner 10. The controller 50 may be provided at the ventilation device 30. The controller 50 may be provided on the ceiling 6 or above the ceiling 6 as a device different from the indoor unit 11 and the ventilation device 30. Functions of the controller 50 may be implemented by a server on cloud.

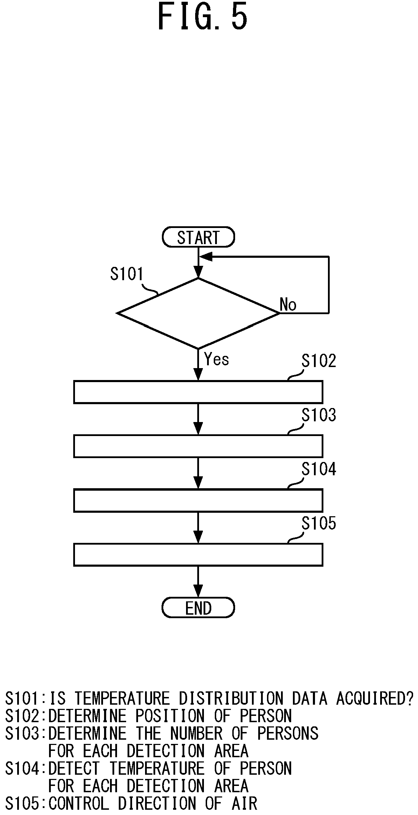

The controller 50 includes a storage unit 51, an acquisition unit 52, a determination unit 53, a detection unit 54, and a control unit 55. Functions of the present environment control system will be described in detail below also with reference to Fig. 5 to Fig. 7. Fig. 5 is a flowchart illustrating an operation example of the environment control system in Embodiment 1.

In the controller 50, it is determined whether or not temperature distribution data is acquired (S101). The temperature sensor 40 detects surface temperatures of objects existing in a particular area in the room 1 in a certain cycle. Data of the surface temperatures detected by the temperature sensor 40, that is, the temperature distribution data is output to the controller 50. The temperature distribution data from the temperature sensor 40 is acquired by the acquisition unit 52 in the controller 50. When the acquisition unit 52 acquires the temperature distribution data from the temperature sensor 40, it is determined as Yes in S101.

The determination unit 53 determines a position of a person in an area in which the temperature sensor 40 detects the surface temperatures on the basis of the temperature distribution data detected by the temperature sensor 40 (S102). For example, the determination unit 53 identifies a portion where a surface temperature is higher than a reference temperature t1 in the temperature distribution data detected by the temperature sensor 40, as a heat source. As an example, the determination unit 53 identifies a person as the heat source. As another example, the determination unit 53 identifies a person and OA equipment as the heat sources. If there is a window 5 in the room 1, the determination unit 53 may identify a person, OA equipment and the window 5 as the heat sources. Such identification of a heat source is performed on the basis of a temperature, a shape, a size, motion, and the like, of a portion where the surface temperature is higher than the reference temperature t1 in the temperature distribution data.

The temperature distribution data is detected in a certain cycle. The determination unit 53 determines whether or not the heat source moves by comparing a plurality of pieces of temperature distribution data detected in chronological order. Motion of the employee 2 is extremely larger than motion of the PC 4 even in a case where the employee 2 sits down and operates the PC 4. As an example, the determination unit 53 identifies a heat source that moves as a person.

Note that there is a case where a mobile PC 4 moves. The determination unit 53 may distinguish between a person and the mobile PC 4 on the basis of a temperature, a shape, a size, and the like, of the heat source that moves. The determination unit 53 identifies a heat source that does not move as OA equipment. The determination unit 53 may distinguish between the OA equipment and the window 5 on the basis of a shape, a size, and the like, of the heat source that does not move. The determination unit 53 may identify a type of the heat source on the basis of other conditions.

The determination unit 53 determines a position of the heat source identified as a person in S102.

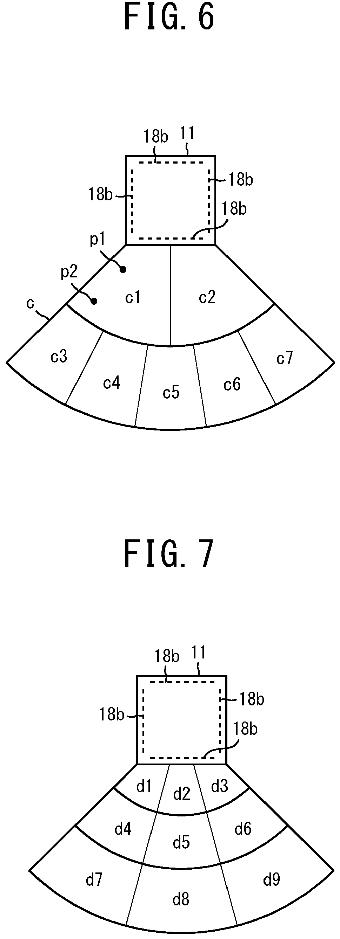

Then, the determination unit 53 determines the number of persons in each of a plurality of detection areas set in advance (S103). Fig. 6 is a diagram illustrating a setting example of detection areas. Fig. 6 is a diagram of the room 1 viewed from above. Fig. 6 illustrates an example where part of the area in which the temperature sensor 40 detects temperatures is divided into a plurality of detection areas c1 to c7. In the example illustrated in Fig. 6, a fan-like area within the reach of air from a certain outlet 18b is divided into detection areas c1 to c7.

In the example illustrated in Fig. 6, the detection areas c1 and c2 are closer to the outlet 18b than the detection areas c3 to c7. The detection areas c1 and c2 have the same area. The detection areas c3 to c7 have the same area. The area of the detection area c1 is larger than the area of the detection area c3. Thus, Fig. 6 illustrates an example where a plurality of detection areas are set in such a manner that areas of detection areas closer to the outlet 18b become larger.

Fig. 7 is a diagram illustrating another setting example of the detection areas. Fig. 7 illustrates a diagram of the room 1 viewed from above in a similar manner to Fig. 6. Fig. 7 illustrates an example where part of the area in which the temperature sensor 40 detects temperatures is divided into a plurality of detection areas d1 to d9. In the example illustrated in Fig. 7, a fan-like area within the reach of air from a certain outlet 18b is divided into detection areas d1 to d9.

In the example illustrated in Fig. 7, the detection areas d1 to d3 are closer to the outlet 18b than the detection areas d4 to d6. The detection areas d4 to d6 are closer to the outlet 18b than the detection areas d7 to d9. The detection areas d1 to d3 have the same area. The detection areas d4 to d6 have the same area. The detection areas d7 to d9 have the same area. The area of the detection area d1 is smaller than the area of the detection area d4. The area of the detection area d4 is smaller than the area of the detection area d7. Thus, Fig. 7 illustrates an example where a plurality of detection areas are set in such a manner that areas of detection areas closer to the outlet 18b become smaller.

A plurality of methods for setting detection areas may be stored in the storage unit 51. In such a case, the determination unit 53 selects an appropriate setting method in accordance with a circumstance at that time in S103.

As an example, the determination unit 53 determines whether or not a setting value of an air volume from the outlet 18b is greater than a reference value in S103. The determination unit 53 sets the detection areas c1 to c7 as in the example illustrated in Fig. 6 if the setting value of the air volume is greater than the reference value. The determination unit 53 sets the detection areas d1 to d9 as in the example illustrated in Fig. 7 if the setting value of the air volume is not greater than the reference value.

As another example, the determination unit 53 may determine whether cooling operation or heating operation is performed in S103. The determination unit 53 sets the detection areas c1 to c7 as in the example illustrated in Fig. 6 if cooling operation is performed. The determination unit 53 sets the detection areas d1 to d9 as in the example illustrated in Fig. 7 if heating operation is performed.

As another example, the determination unit 53 may always set the detection areas c1 to c7 as in the example illustrated in Fig. 6. The determination unit 53 may always set the detection areas d1 to d9 as in the example illustrated in Fig. 7. In the following description, the example illustrated in Fig. 6, that is, an example where the detection areas c1 to c7 are set will be described. Specifically, the determination unit 53 determines the number of persons in the detection area c1 in S103. The determination unit 53 determines the number of persons in the detection area c2. In a similar manner, the determination unit 53 determines the number of persons in the detection area c7.

Then, the detection unit 54 detects a temperature of the person in each of a plurality of detection areas (S104). The detection unit 54 detects the temperature on the basis of the temperature distribution data detected by the temperature sensor 40. In a case where there are a plurality of persons in a certain detection area, the detection unit 54 may detect an average value of temperatures of the plurality of persons in S104. The detection unit 54 may detect the highest temperature among the temperatures of the plurality of persons in S104. The detection unit 54 may detect the lowest temperature among the temperatures of the plurality of persons in S 104.

As another example, the detection unit 54 may detect the highest temperature among the temperatures of the plurality of persons if cooling operation is performed and may detect the lowest temperature if heating operation is performed in S104. The detection unit 54 may detect the lowest temperature among the temperatures of the plurality of persons if cooling operation is performed and may detect the highest temperature if heating operation is performed in S104.

Then, the control unit 55 controls a direction of air from the outlet 18b (S105). The control unit 55 controls the direction of air at least on the basis of the determination result in S103. In the following description, to simplify the description, only control on the louver 20a will be described. Control on the louver 20b is performed in a similar manner to control on the louver 20a.

Basically, the control unit 55 controls the motor 21 in such a manner that the angular velocity of the louver 20a becomes smaller as air from the outlet 18b is blown toward a detection area farther from the outlet 18b. Such basic control is performed, for example, in the case where there is the same number of persons in each of the detection areas.

As an example, a case will be considered where it is determined in S103 that there is one person in the detection area c1 and there is one person in the detection area c3. In such a case, the control unit 55 sets the angular velocity of the louver 20a when air is blown to the detection area c1 from the outlet 18b at a velocity ω1. The control unit 55 sets the angular velocity of the louver 20a when air is blown toward the detection area c3 from the outlet 18b at a velocity ω2. The velocity ω2 is smaller than the velocity ω1.

In this manner, according to the present system, it is possible to reduce lack of uniformity in air blowing including too much air blowing toward the person in the detection area c1 and too little air blowing toward the person in the detection area c3. Further, it is possible to blow swingy air toward the person in each detection area, so that it is possible to activate the brain by a stimulus by airflow and encourage wakefulness or concentration. According to the present system, it is possible to prevent decrease in comfort, productivity and workability of persons in the room 1. Further, it is possible to expect improvement in comfort, productivity and workability of persons in the room 1.

In the following description, the angular velocity of the louver when air from the outlet 18b is blown toward a particular detection area will also be referred to as the angular velocity of the louver for the detection area. For example, the above-described velocity ω1 is the angular velocity of the louver 20a for the detection area c 1. The velocity ω2 is the angular velocity of the louver 20a for the detection area c3.

Further, the control unit 55 controls the motor 21 in such a manner that the angular velocity of the louver 20a becomes smaller as the number of persons detected in S103 is larger, in each of the detection areas c1 to c7. For example, if it is determined in S103 that there is one person in the detection area c1, the control unit 55 sets the angular velocity of the louver 20a for the detection area c1 at the velocity ω1. On the other hand, if it is determined in S103 that there are three persons in the detection area c 1, the control unit 55 sets the angular velocity of the louver 20a for the detection area c1 at a velocity ω3. The velocity ω3 is smaller than the velocity ω1.

In a similar manner, if it is determined in S103 that there is one person in the detection area c3, the control unit 55 sets the angular velocity of the louver 20a for the detection area c3 at the velocity ω2. If it is determined in S103 that there are three persons in the detection area c3, the control unit 55 sets the angular velocity of the louver 20a for the detection area c3 at a velocity ω4. The velocity ω4 is smaller than the velocity ω2. The velocity ω4 is smaller than the velocity ω3.

In this manner, according to the present system, the angular velocity of the louver 20a can be appropriately set in accordance with the number of persons in each detection area. For example, it is possible to send more air to the detection area c1 in a case where there are three persons in the detection area c1 than in a case where there is one person in the detection area c1.

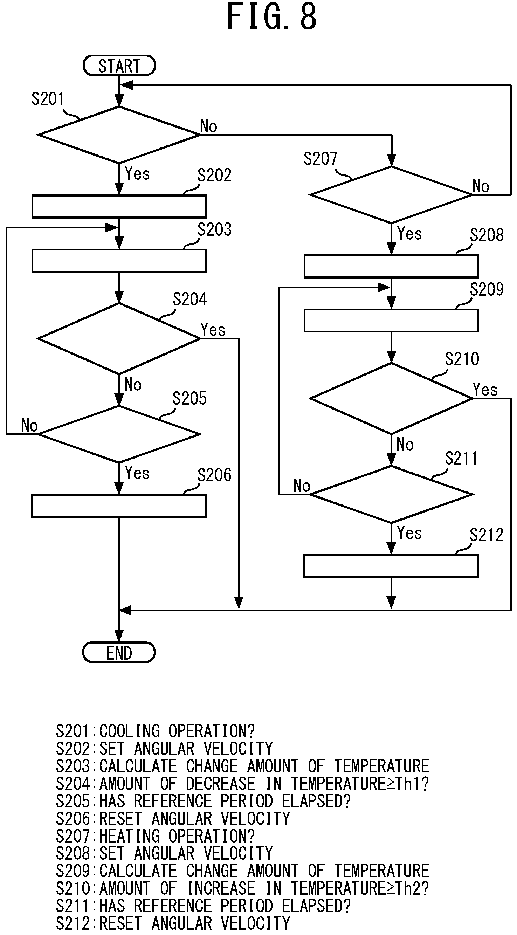

The control unit 55 may control the direction of air on the basis of both the determination result in S103 and the detection result in S104. Fig. 8 is a flowchart illustrating another example of control of the direction of air by the control unit 55. In the case where control of the direction of air illustrated in Fig. 8 is performed, the controller 50 further includes a calculation unit 56 and a determination unit 57.

In the controller 50, it is determined whether or not cooling operation is performed in the air conditioner 10 (S201). If it is determined as Yes in S201, the control unit 55 controls the motor 21 in such a manner that the angular velocity of the louver 20a becomes smaller as air from the outlet 18b is blown toward a detection area farther from the outlet 18b in a similar manner to the example described above. Further, the control unit 55 controls the motor 21 in such a manner that the angular velocity of the louver 20a becomes smaller as the number of persons determined in S103 is larger, in each of the detection areas c1 to c7. By this means, the angular velocity of the louver 20a for each of the detection areas c1 to c7 is set (S202). For example, the angular velocity of the louver 20a for the detection area c1 is set at the velocity ω1. The angular velocity of the louver 20a for the detection area c3 is set at the velocity ω2.

The temperature sensor 40 detects surface temperatures in a certain cycle. The detection unit 54 performs detection every time the acquisition unit 52 acquires the temperature distribution data from the temperature sensor 40. The calculation unit 56 calculates the change amount of the temperature of the person detected by the detection unit 54 (S203). The calculation unit 56 performs calculation for each of the detection areas c1 to c7. For example, the calculation unit 56 calculates the change amount of the temperature of the person in the detection area c1. The calculation unit 56 calculates the change amount of the temperature of the person in the detection area c3.

The determination unit 57 determines whether or not the amount of decrease in the temperature of the person is equal to or greater than a threshold Th1 on the basis of the calculation result of the calculation unit 56 (S204). The threshold Th1 is set in advance. The determination unit 57 performs determination for each of the detection areas c1 to c7. For example, the determination unit 57 determines whether or not the amount of decrease in the temperature of the person in the detection area c1 is equal to or greater than the threshold Th1. The determination unit 57 determines whether or not the amount of decrease in the temperature of the person in the detection area c3 is equal to or greater than the threshold Th1.

If the amount of decrease in the temperature of the person in the detection area c1 is not equal to or greater than the threshold Th1, it is determined as No in S204. If it is determined as No in S204, it is determined whether or not a reference period T1 has elapsed since the angular velocity was set in S202 (S205). The reference period T1 is set in advance. The reference period T1 is preferably set between 5 minutes and 15 minutes. As an example, the reference period T1 is set at 10 minutes. If it is determined as No in S205, the calculation in S203 and the determination in S204 are repeatedly performed until it is determined as Yes in S204 or it is determined as Yes in S205.

If it is determined as Yes in S204 before the reference period T1 has elapsed in S205, the control unit 55 maintains the angular velocity set in S202 as is. For example, after the angular velocity of the louver 20a for the detection area c1 is set at the velocity ω1 in S202, if the amount of decrease in the temperature of the person in the detection area c1 reaches the threshold Th1 before the reference period T1 has elapsed, it is determined as Yes in S204. In such a case, the angular velocity of the louver 20a for the detection area c1 is not changed from the velocity ω1.

In a similar manner, after the angular velocity of the louver 20a for the detection area c3 is set at the velocity ω2 in S202, if the amount of decrease in the temperature of the person in the detection area c3 reaches the threshold Th1 before the reference period T1 has elapsed, it is determined as Yes in S204. In such a case, the angular velocity of the louver 20a for the detection area c3 is not changed from the velocity ω2.

On the other hand, if the reference period T1 has elapsed without it being determined as Yes in S204, it is determined as Yes in S205. If it is determined as Yes in S205, the control unit 55 resets the angular velocity, set in S202, at a smaller angular velocity. By this means, more cold air is sent to the target detection area.

After the angular velocity of the louver 20a for the detection area c 1 is set at the velocity ω1 in S202, if the amount of decrease in the temperature of the person in the detection area c1 does not reach the threshold Th1 even after the reference period T1 has elapsed, it is determined as Yes in S205. If it is determined as Yes in S205, the control unit 55 sets the angular velocity of the louver 20a for the detection area c1 at a velocity ω5. The velocity ω5 is smaller than the velocity ω1.

Further, after the angular velocity of the louver 20a for the detection area c3 is set at the velocity ω2 in S202, if the amount of decrease in the temperature of the person in the detection area c3 does not reach the threshold Th1 even after the reference period T1 has elapsed, it is determined as Yes in S205. If it is determined as Yes in S205, the control unit 55 sets the angular velocity of the louver 20a for the detection area c3 at a velocity ω6. The velocity ω6 is smaller than the velocity ω2.

Note that the threshold Th1 may be a value based on an experiment that has been actually performed. For example, the threshold Th1 may be determined on the basis of a result of measurement of the amount of decrease in a temperature of a person as a result of cold air being blown toward the person only for a specific period. The threshold Th1 may be determined by correcting the measurement result in a range of a detection error of the temperature sensor 40 in view of the detection error of the temperature sensor 40. The threshold Th1 may be determined using other methods.

On the other hand, if it is determined as No in S201, it is determined in the controller 50 whether or not heating operation is performed in the air conditioner 10 (S207). The processing in S208 is similar to the processing in S202. In S208, the angular velocity of the louver 20a for each of the detection areas c1 to c7 is set. For example, the angular velocity of the louver 20a for the detection area c1 is set at the velocity ω1. The angular velocity of the louver 20a for the detection area c3 is set at the velocity ω2.

The processing in S209 is similar to the processing in S203. In S209, the calculation unit 56 calculates the change amount of the temperature of the person detected by the detection unit 54. The calculation unit 56 performs calculation for each of the detection areas c1 to c7. For example, the calculation unit 56 calculates the change amount of the temperature of the person in the detection area c1. The calculation unit 56 calculates the change amount of the temperature of the person in the detection area c3.

The determination unit 57 determines whether or not the amount of increase in the temperature of the person is equal to or greater than a threshold Th2 on the basis of the calculation result of the calculation unit 56 (S210). The threshold Th2 is set in advance. The determination unit 57 performs determination for each of the detection areas c1 to c7. For example, the determination unit 57 determines whether or not the amount of increase in the temperature of the person in the detection area c1 is equal to or greater than the threshold Th2. The determination unit 57 determines whether or not the amount of increase in the temperature of the person in the detection area c3 is equal to or greater than the threshold Th2.

If the amount of increase in the temperature of the person in the detection area c1 is not equal to or greater than the threshold Th2, it is determined as No in S210. If it is determined as No in S210, it is determined whether or not a reference period T2 has elapsed since the angular velocity was set in S208 (S211). The reference period T2 is set in advance. The reference period T2 is preferably set between 5 minutes and 15 minutes. As an example, the reference period T2 is set at 10 minutes. If it is determined as No in S211, the calculation in S209 and the determination in S210 are repeatedly performed until it is determined as Yes in S210 or it is determined as Yes in S211.

If it is determined as Yes in S210 before the reference period T2 has elapsed in S211, the control unit 55 maintains the angular velocity set in S208 as is. For example, after the angular velocity of the louver 20a for the detection area c1 is set at the velocity ω1 in S208, if the amount of increase in the temperature of the person in the detection area c1 reaches the threshold Th2 before the reference period T2 has elapsed, it is determined as Yes in S210. In such a case, the angular velocity of the louver 20a for the detection area c1 is not changed from the velocity ω1.

In a similar manner, after the angular velocity of the louver 20a for the detection area c3 is set at the velocity ω2 in S208, if the amount of increase in the temperature of the person in the detection area c3 reaches the threshold Th2 before the reference period T2 has elapsed, it is determined as Yes in S210. In such a case, the angular velocity of the louver 20a for the detection area c3 is not changed from the velocity ω2.

On the other hand, if the reference period T2 has elapsed without it being determined as Yes in S210, it is determined as Yes in S211. If it is determined as Yes in S211, the control unit 55 resets the angular velocity, set in S208, at a smaller angular velocity. By this means, more hot air is sent to the target detection area.

After the angular velocity of the louver 20a for the detection area c 1 is set at the velocity ω1 in S208, if the amount of increase in the temperature of the person in the detection area c1 does not reach the threshold Th2 even after the reference period T2 has elapsed, it is determined as Yes in S211. If it is determined as Yes in S211, the control unit 55 sets the angular velocity of the louver 20a for the detection area c1 at the velocity ω5.

Further, after the angular velocity of the louver 20a for the detection area c3 is set at the velocity ω2 in S208, if the amount of increase in the temperature of the person in the detection area c3 does not reach the threshold Th2 even after the reference period T2 has elapsed, it is determined as Yes in S211. If it is determined as Yes in S211, the control unit 55 sets the angular velocity of the louver 20a for the detection area c3 at the velocity ω6.

Note that the threshold Th2 may be a value based on an experiment that has been actually performed. For example, the threshold Th2 may be determined on the basis of a result of measurement of the amount of increase in a temperature of a person as a result of hot air being blown toward the person only for a specific period. The threshold Th2 may be determined by correcting the measurement result in a range of a detection error of the temperature sensor 40. The threshold Th1 may be determined using other methods.

In the example illustrated in Fig. 8, the calculation unit 56 does not have to use a temperature of a person who stays in the room 1 for equal to or longer than a certain period in calculation in S203 and S209.

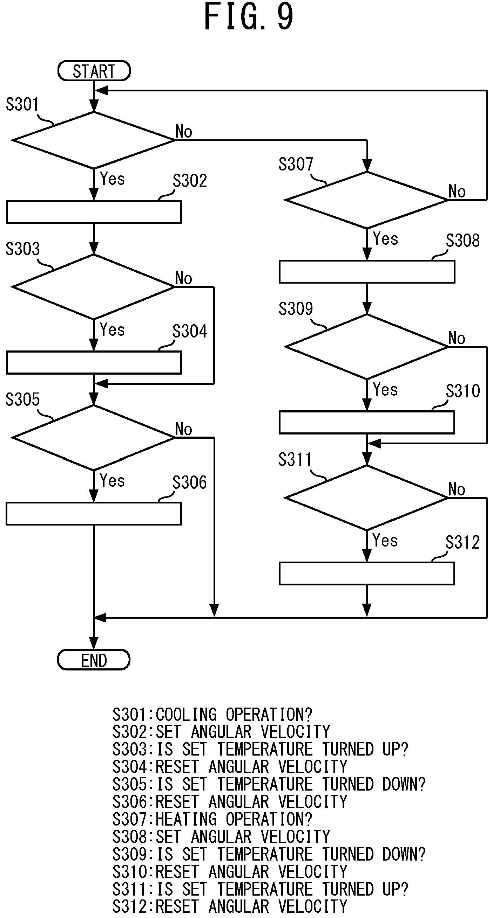

Fig. 9 is a flowchart illustrating another example of control of a direction of air by the control unit 55. Processing in S301 and S302 is similar to the processing in S201 and S202. In S302, the angular velocity of the louver 20a for each of the detection areas c1 to c7 is set.

In the controller 50, it is determined whether or not a set temperature of cooling operation is turned up (S303). The person in the room 1 turns up the set temperature when the person feels cold. Thus, if it is determined as Yes in S303, the control unit 55 resets the angular velocity of the louver 20a at a velocity greater than the current velocity (S304). For example, the control unit 55 uniformly increases the angular velocities of the louver 20a for the detection areas c1 to c7.

In the controller 50, it is determined whether or not the set temperature of cooling operation is turned down (S305). The person in the room 1 turns down the set temperature when the person feels hot. Thus, if it is determined as Yes in S305, the control unit 55 resets the angular velocity of the louver 20a at a velocity smaller than the current velocity (S306). For example, the control unit 55 uniformly decreases the angular velocities of the louver 20a for the detection areas c1 to c7.

Processing in S307 and S308 is similar to the processing in S207 and S208. In S308, the angular velocity of the louver 20a for each of the detection areas c1 to c7 is set.

In the controller 50, it is determined whether or not a set temperature of heating operation is turned down (S309). The person in the room 1 turns down the set temperature when the person feels hot. Thus, if it is determined as Yes in S309, the control unit 55 resets the angular velocity of the louver 20a at a velocity greater than the current velocity (S310). For example, the control unit 55 uniformly increases the angular velocities of the louver 20a for the detection areas c1 to c7.

In the controller 50, it is determined whether or not the set temperature of heating operation is turned up (S311). The person in the room 1 turns up the set temperature when the person feels cold. Thus, if it is determined as Yes in S311, the control unit 55 resets the angular velocity of the louver 20a at a velocity smaller than the current velocity (S312). For example, the control unit 55 uniformly decreases the angular velocities of the louver 20a for the detection areas c1 to c7.

Note that the present environment control system may include a system in which the employee 2 in the room 1 reports a subjective feeling, for example, a feeling of discomfort regarding a temperature, such as hot and cold. In such a case, the control unit 55 may reset the angular velocity of the louver 20a on the basis of the data collected in this system in a similar manner to the example illustrated in Fig. 9.

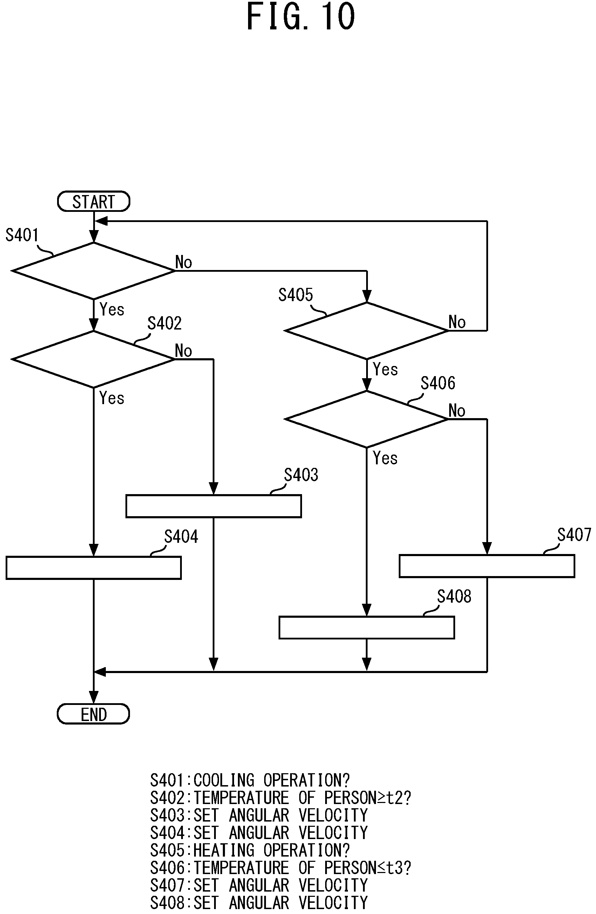

Fig. 10 is a flowchart illustrating another example of control of a direction of air by the control unit 55. In the case where control of the direction of air illustrated in Fig. 10 is performed, the controller 50 further includes a determination unit 58.

In the controller 50, it is determined whether or not cooling operation is performed in the air conditioner 10 (S401). If it is determined as Yes in S401, the control unit 55 controls the motor 21 in such a manner that the angular velocity of the louver 20a becomes smaller as air from the outlet 18b is blown toward a detection area farther from the outlet 18b in a similar manner to the example described above. Further, the control unit 55 controls the motor 21 in such a manner that the angular velocity of the louver 20a becomes smaller as the number of persons determined in S 103 is larger, in each of the detection areas c1 to c7.

Further, if it is determined as Yes in S401, the determination unit 58 determines whether or not the temperature of the person detected by the detection unit 54 is equal to or higher than a reference temperature t2 (S402). The reference temperature t2 is set in advance. The determination unit 58 performs determination for each of the detection areas c1 to c7. For example, the determination unit 58 determines whether or not the temperature of the person in the detection area c1 is equal to or higher than the reference temperature t2.

If the temperature of the person in the detection area c1 is lower than the reference temperature t2, it is determined as No in S402. If it is determined as No in S402, the control unit 55 sets the angular velocity of the louver 20a for the detection area c1 at a velocity ω7 also on the basis of the number of persons determined in S103 (S403).

If the temperature of the person in the detection area c1 is higher than the reference temperature t2, it is determined as Yes in S402. If it is determined as Yes in S402, the control unit 55 sets the angular velocity of the louver 20a for the detection area c1 at a velocity ω8 also on the basis of the number of persons determined in S103 (S404). The velocity ω8 is smaller than the velocity ω7.

The processing in S402 to S404 is performed for each of the detection areas c1 to c7. By this means, the angular velocity of the louver 20a for each of the detection areas c1 to c7 is set.

On the other hand, if it is determined as No in S401, in the controller 50, it is determined whether or not heating operation is performed in the air conditioner 10 (S405). If it is determined as Yes in S405, the control unit 55 controls the motor 21 in such a manner that the angular velocity of the louver 20a becomes smaller as air from the outlet 18b is blown toward a detection area farther from the outlet 18b in a similar manner to the example described above. Further, the control unit 55 controls the motor 21 in such a manner that the angular velocity of the louver 20a becomes smaller as the number of persons determined in S103 is larger, in each of the detection areas c1 to c7.

Further, if it is determined as Yes in S405, the determination unit 58 determines whether or not the temperature of the person detected by the detection unit 54 is equal to or lower than a reference temperature t3 (S406). The reference temperature t3 is set in advance. As an example, the reference temperature t3 is set at an average temperature of persons when an ambient temperature is 27°C. The determination unit 58 performs determination for each of the detection areas c1 to c7. For example, the determination unit 58 determines whether or not the temperature of the person in the detection area c1 is equal to or lower than the reference temperature t3.

If the temperature of the person in the detection area c1 is higher than the reference temperature t3, it is determined as No in S406. If it is determined as No in S406, the control unit 55 sets the angular velocity of the louver 20a for the detection area c1 at a velocity ω9 also on the basis of the number of persons determined in S103 (S407).

If the temperature of the person in the detection area c1 is lower than the reference temperature t3, it is determined as Yes in S406. If it is determined as Yes in S406, the control unit 55 sets the angular velocity of the louver 20a for the detection area c1 at a velocity ω10 also on the basis of the number of persons determined in S103 (S408). The velocity ω10 is smaller than the velocity ω9.

The processing in S406 to S408 is performed for each of the detection areas c1 to c7. By this means, the angular velocity of the louver 20a for each of the detection areas c1 to c7 is set.

In the present embodiment, an example where control of the louver 20 is performed for each detection area has been described. As another example, control of the louver 20 may be performed for each person. In such a case, as illustrated in Fig. 6, the whole of the detection areas c1 to c7 is set as an area c. Then, in the controller 50, operation similar to the operation indicated in Fig. 5 is performed.

In S101 and S 102 in Fig. 5, processing similar to the processing described above is performed. In S102, the determination unit 53 determines a position of a person in the area c on the basis of the temperature distribution data detected by the temperature sensor 40.

In S104, the detection unit 54 detects the temperature of the person in the area c. Specifically, the detection unit 54 detects a temperature of a position determined by the determination unit 53 on the basis of the temperature distribution data detected by the temperature sensor 40.

In S105, the control unit 55 controls a direction of air from the outlet 18b (S105). The control unit 55 controls the direction of air at least on the basis of the determination result in S102. When air from the outlet 18b is blown toward the person in the area c, that is, the position determined by the determination unit 53, the control unit 55 controls the motor 21 in such a manner that the angular velocity of the louver 20a becomes smaller as the position is farther from the outlet 18b.

As an example, a case will be considered where it is determined in S102 that there is a person in each of a position p1 and a position p2 in the area c. The position p2 is farther from the outlet 18b than the position p1. The control unit 55 sets the angular velocity of the louver 20a when air from the outlet 18b is blown toward the position p1, at a velocity ω11. The control unit 55 sets the angular velocity of the louver 20a when air from the outlet 18b is blown toward the position p2, at a velocity ω12. The velocity ω12 is smaller than the velocity ω11. Also according to such a system, it is possible to reduce lack of uniformity in air blowing including too much air blowing toward the person at the position p1 and too little air blowing toward the person at the position p2.

Further, the control unit 55 controls the direction of air on the basis of both the determination result in S102 and the detection result in S104. As an example, in the controller 50, operation similar to the operation indicated in Fig. 8 is performed.

In S201 and S202 in Fig. 8, processing similar to the processing described above is performed. If it is determined as Yes in S201, the control unit 55 controls the motor 21 in such a manner that the angular velocity of the louver 20a for the positions determined by the determination unit 53 becomes smaller as the position is farther from the outlet 18b. For example, the angular velocity of the louver 20a for the position p1 is set at the velocity ω11. The angular velocity of the louver 20a for the position p2 is set at the velocity ω12.

In S203, the calculation unit 56 calculates the change amount of the temperature detected by the detection unit 54. The calculation unit 56 performs calculation for each of the positions determined by the determination unit 53. For example, the calculation unit 56 calculates the change amount of the temperature at the position p1. The calculation unit 56 calculates the change amount of the temperature at the position p2.

In S204, the determination unit 57 determines whether or not the amount of decrease in the temperature of the person is equal to or greater than the threshold Th1 on the basis of the calculation result of the calculation unit 56. The determination unit 57 performs determination for each of the positions determined by the determination unit 53. For example, the determination unit 57 determines whether or not the amount of decrease in the temperature at the position p1 is equal to or greater than the threshold Th1. The determination unit 57 determines whether or not the amount of decrease in the temperature at the position p2 is equal to or greater than the threshold Th1.

If the amount of decrease in the temperature at the position p1, that is, the temperature of the person at the position p1 is not equal to or greater than the threshold Th1, it is determined as No in S204. If it is determined as No in S204, it is determined whether or not the reference period T1 has elapsed since the angular velocity was set in S202 (S205). If it is determined as Yes in S204 before the reference period T1 has elapsed in S205, the control unit 55 maintains the angular velocity set in S202 as is. For example, after the angular velocity of the louver 20a for the position p1 is set at the velocity ω11 in S202, if the amount of decrease in the temperature at the position p1 reaches the threshold Th1 before the reference period T1 has elapsed, it is determined as Yes in S204. In such a case, the angular velocity of the louver 20a for the position p1 is not changed from the velocity ω11.

On the other hand, if the reference period T1 has elapsed without it being determined as Yes in S204, it is determined as Yes in S205. If it is determined as Yes in S205, the control unit 55 resets the angular velocity, set in S202, at a smaller angular velocity. By this means, more cold air is sent to the target position.

After the angular velocity of the louver 20a for the position p1 is set at the velocity ω11 in S202, if the amount of decrease in the temperature at the position p1 does not reach the threshold Th1 even after the reference period T1 has elapsed, it is determined as Yes in S205. If it is determined as Yes in S205, the control unit 55 resets the angular velocity of the louver 20a for the position p1 at a velocity ω13. The velocity ω13 is smaller than the velocity ω11.

On the other hand, also in the case where it is determined as Yes in S207, the control unit 55 controls the motor 21 in such a manner that the angular velocity of the louver 20a for the positions determined by the determination unit 53 becomes smaller as the position is farther from the outlet 18b. For example, the angular velocity of the louver 20a for the position p1 is set at the velocity ω11. The angular velocity of the louver 20a for the position p2 is set at the velocity ω12.

Processing in S209 is similar to the processing in S203. For example, the calculation unit 56 calculates the change amount of the temperature at the position p1. The calculation unit 56 calculates the change amount of the temperature at the position p2. In S210, the determination unit 57 determines whether or not the amount of increase in the temperature of the person is equal to or greater than the threshold Th2 on the basis of the calculation result of the calculation unit 56. The determination unit 57 performs determination for each of the positions determined by the determination unit 53. For example, the determination unit 57 determines whether or not the amount of increase in the temperature at the position p1 is equal to or greater than the threshold Th2. The determination unit 57 determines whether or not the amount of increase in the temperature at the position p2 is equal to or greater than the threshold Th2.

If the amount of increase in the temperature at the position p1 is not equal to or greater than the threshold Th2, it is determined as No in S210. If it is determined as No in S210, it is determined whether or not the reference period T2 has elapsed since the angular velocity was set in S208 (S211). If it is determined as Yes in S210 before the reference period T2 has elapsed in S211, the control unit 55 maintains the angular velocity set in S208 as is. For example, after the angular velocity of the louver 20a for the position p1 is set at the velocity ω11 in S208, if the amount of increase in the temperature at the position p1 reaches the threshold Th2 before the reference period T2 has elapsed, it is determined as Yes in S210. In such a case, the angular velocity of the louver 20a for the position p1 is not changed from the velocity ω11.

On the other hand, if the reference period T2 has elapsed without it being determined as Yes in S210, it is determined as Yes in S211. If it is determined as Yes in S211, the control unit 55 resets the angular velocity, set in S208, to a smaller angular velocity. By this means, more hot air is sent to the target detection area.

After the angular velocity of the louver 20a for the position p1 is set at the velocity ω11 in S208, if the amount of increase in the temperature at the position p1 does not reach the threshold Th2 even after the reference period T2 has elapsed, it is determined as Yes in S211. If it is determined as Yes in S211, the control unit 55 resets the angular velocity of the louver 20a for the position p1 at a velocity ω14. The velocity ω14 is smaller than the velocity ω11.

As another example where the louver 20 is controlled for each person, operation similar to the operation indicated in Fig. 9 may be performed in the controller 50.

As another example where the louver 20 is controlled for each person, operation similar to the operation indicated in Fig. 10 may be performed in the controller 50. In such a case, if it is determined as Yes in S401 in Fig. 10, the control unit 55 controls the motor 21 in such a manner that the angular velocity of the louver 20a for the positions determined by the determination unit 53 becomes smaller as the position is farther from the outlet 18b.

Further, if it is determined as Yes in S401, the determination unit 58 determines whether or not the temperature detected by the detection unit 54 is equal to or higher than the reference temperature t2 (S402). The determination unit 58 performs determination for each of the positions determined by the determination unit 53. For example, the determination unit 58 determines whether or not the temperature at the position p1 is equal to or higher than the reference temperature t2.

If the temperature at the position p1 is lower than the reference temperature t2, it is determined as No in S402. If it is determined as No in S402, the control unit 55 sets the angular velocity of the louver 20a for the position p1 at a velocity ω15 also on the basis of a distance from the outlet 18b (S403).

If the temperature at the position p1 is higher than the reference temperature t2, it is determined as Yes in S402. If it is determined as Yes in S402, the control unit 55 sets the angular velocity of the louver 20a for the position p1 at a velocity ω16 also on the basis of the distance from the outlet 18b (S404). The velocity ω16 is smaller than the velocity ω15.

The processing from S402 to S404 is performed for each of the positions determined by the determination unit 53. By this means, the angular velocity of the louver 20a for each of the positions determined by the determination unit 53 is set.

Similar processing is performed during heating operation. Specifically, if it is determined as Yes in S405, the control unit 55 controls the motor 21 in such a manner that the angular velocity of the louver 20a for the positions determined by the determination unit 53 becomes smaller as the position is farther from the outlet 18b.

Further, if it is determined as Yes in S405, the determination unit 58 determines whether or not the temperature detected by the detection unit 54 is equal to or lower than a reference temperature t3 (S406). The determination unit 58 performs determination for each of the positions determined by the determination unit 53. For example, the determination unit 58 determines whether or not the temperature at the position p1 is equal to or lower than the reference temperature t3.

If the temperature at the position p1 is higher than the reference temperature t3, it is determined as No in S406. If it is determined as No in S406, the control unit 55 sets the angular velocity of the louver 20a for the position p1 at a velocity ω17 also on the basis of the distance from the outlet 18b (S407).

If the temperature at the position p1 is lower than the reference temperature t3, it is determined as Yes in S406. If it is determined as Yes in S406, the control unit 55 sets the angular velocity of the louver 20a for the position p1 at a velocity ω18 also on the basis of the distance from the outlet 18b (S408). The velocity ω18 is smaller than the velocity ω17.

The processing from S406 to S408 is performed for each of the positions determined by the determination unit 53. By this means, the angular velocity of the louver 20a for each of the positions determined by the determination unit 53 is set.

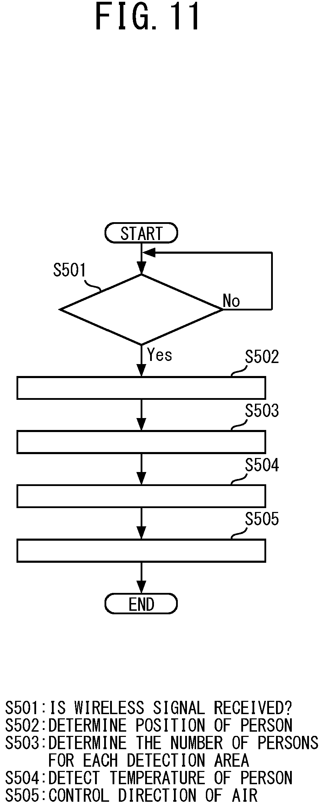

In the present embodiment, an example where the louver 20 is controlled using the temperature sensor 40 has been described. As another example, the louver 20 may be controlled using a mobile terminal 41 like a wearable device. Fig. 11 is a flowchart illustrating another operation example of the environment control system.

In the controller 50, it is determined whether or not a wireless signal is received from the mobile terminal 41 (S501). The employee 2 in the room 1 carries the mobile terminal 41. A wireless signal is transmitted from the mobile terminal 41 in a certain cycle. The wireless signal transmitted from the mobile terminal 41 is received by the acquisition unit 52 in the controller 50. If the acquisition unit 52 receives the wireless signal from the mobile terminal 41, it is determined as Yes in S501.

The wireless signal from the mobile terminal 41 includes position information. As another example, the wireless signal from the mobile terminal 41 further includes temperature information of a person who carries the mobile terminal 41. The wireless signal from the mobile terminal 41 may further include information for identifying the person. The wireless signal from the mobile terminal 41 may further include other biological information such as a pulse and a heart rate. The wireless signal from the mobile terminal 41 may further include information indicating constitution such as sensitive to heat and sensitive to cold.

The determination unit 53 determines the position of a person in a particular area on the basis of the wireless signal received by the acquisition unit 52 from the mobile terminal 41 (S502). As an example, the determination unit 53 determines the position of the person in the area c. In such a case, as described above, the louver 20 is controlled for each person.

If the area c is divided into a plurality of detection areas c1 to c7, the determination unit 53 may determine the number of persons in each of the detection areas c1 to c7 in S503. In such a case, the louver 20 is controlled for each of the detection areas c1 to c7. Note that in S502, the position may be determined using reception strength and a triangulation method by receiving the wireless signal from the mobile terminal 41 at a plurality of points.

Processing in S504 and S505 is similar to the processing in S104 and S105.

Further, in the case where the mobile terminal 41 is used, each of the operation flows indicated from Fig. 8 to Fig. 10 may be implemented. In such a case, the temperature is detected in S504 on the basis of the wireless signal from the mobile terminal 41. Specific processing to be performed in each of the operation flows indicated from Fig. 8 to Fig. 10 is similar to the processing in the above-described example.

In the case where the mobile terminal 41 is used, the controller 50 can acquire various kinds of information from the mobile terminal 41. The controller 50 may perform other control on the basis of these kinds of information. For example, in the example indicated in Fig. 10, the reference temperature t2 is set at 36°C in advance, and the reference temperature t3 is set at 36.5°C in advance. In such a case, if it is determined as Yes in S401, the determination unit 58 determines whether or not the temperature detected in S504 is equal to or higher than the reference temperature t2 (S402).

Here, if the wireless signal received by the acquisition unit 52 includes information indicating sensitive to cold, the reference temperature t2 is corrected to, for example, 36.4°C. The determination unit 58 performs determination in S402 on the basis of the corrected reference temperature t2. Processing indicated in S403 and S404 is performed in a similar manner to the example described above.

In the case where the mobile terminal 41 is used in the present system, load on a human body by cold air or hot air may be calculated on the basis of other biological information included in the wireless signal. In such a case, the louver 20 is controlled also in view of the calculated load.

In the case where the mobile terminal 41 is used in the present system, the mobile terminal 41 may be used to implement a system in which the employee 2 in the room 1 reports a subjective feeling, for example, a feeling of discomfort regarding temperature such as hot and cold.

Note that all the employees 2 in the room 1 need to carry the mobile terminals 41 for using the mobile terminals 41. This imposes a big burden on the employees 2. On the other hand, use of the temperature sensor 40 does not impose a burden on the employees 2. Further, it is not necessary to prepare the temperature sensors 40 of the number corresponding to the number of the employees 2. Thus, the present system preferably includes the temperature sensor 40.

In the present embodiment, the temperature sensor 40 and the controller 50 have been described as different devices. This is an example. The temperature sensor 40 may be incorporated in the controller 50. Both of the temperature sensor 40 and the controller 50 may be incorporated in the air conditioner 10.

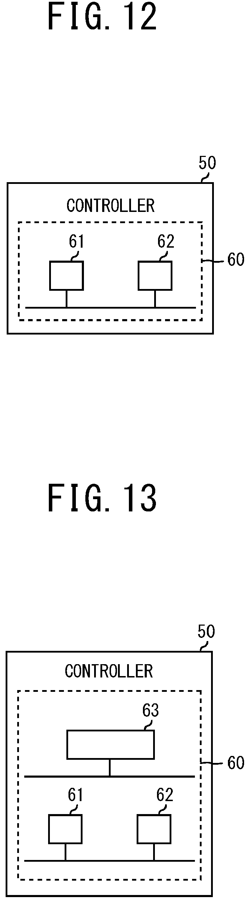

In the present embodiment, the units indicated with reference numerals 51 to 58 indicate functions of the controller 50. Fig. 12 is a diagram illustrating an example of a hardware resource of the controller 50. The controller 50 includes, for example, processing circuitry 60 including a processor 61 and a memory 62 as the hardware resource. The functions of the storage unit 51 are implemented by the memory 62. The controller 50 implements the functions of the units indicated with reference numerals 52 to 58 by executing, with the processor 61, a program stored in the memory 62.

The processor 61 is also referred to as a CPU (central processing unit), a central processing device, a processing device, a calculation device, a microprocessor, a microcomputer or a DSP. As the memory 62, a semiconductor memory, a magnetic disk, a flexible disk, an optical disc, a compact disc, a mini disc or a DVD may be employed. The semiconductor memory that can be employed includes a RAM, a ROM, a flash memory, an EPROM, an EEPROM, and the like.

Fig. 13 is a diagram illustrating another example of the hardware resource of the controller 50. In the example illustrated in Fig. 13, the controller 50 includes, for example, the processing circuitry 60 including the processor 61, the memory 62 and dedicated hardware 63. Fig. 13 illustrates an example where part of the functions of the controller 50 is implemented by the dedicated hardware 63. All of the functions of the controller 50 may be implemented by the dedicated hardware 63. As the dedicated hardware 63, a single circuit, a complex circuit, a programmed processor, a parallel programmed processor, an ASIC, an FPGA or a combination thereof can be employed.

### Industrial Applicability

The environment control system according to the present disclosure can be applied to a system in which a direction of air is controlled by a louver.

### Reference Signs List

1 room, 2 employee, 3 desk, 4 PC, 5 window, 6 ceiling, 7 wall, 8 floor, 10 air conditioner, 11 indoor unit, 12 outdoor unit, 13 pipe, 14 controller, 15 condenser, 16 evaporator, 17 fan, 18 panel, 18a inlet, 18b outlet, 19 chassis, 20a-20b louver, 21 motor, 30 ventilation device, 31 body, 32a-32d duct, 33 heat exchange element, 40 temperature sensor, 41 mobile terminal, 50 controller, 51 storage unit, 52 acquisition unit, 53 determination unit, 54 detection unit, 55 control unit, 56 calculation unit, 57 determination unit, 58 determination unit, 60 processing circuitry, 61 processor, 62 memory, 63 dedicated hardware

## Claims

1. An environment control system comprising:
a louver configured to change a direction of air blown from an outlet;
a motor configured to rotatively drive the louver;
a sensor configured to detect surface temperatures of objects existing in a particular area;
determination means for determining a position of a person in the area on a basis of data of the surface temperatures detected by the sensor; and
control means for controlling the motor in such a manner that an angular velocity of the louver becomes smaller as the position determined by the determination means is farther from the outlet when air from the outlet is blown toward the position.

2. The environment control system according to claim 1, wherein
air cooled by a cooler is blown from the outlet, and
after the angular velocity of the louver for the position determined by the determination means is set at a first velocity, if an amount of decrease in a temperature at the position does not reach a threshold even after a reference period has elapsed, the control means sets the angular velocity of the louver for the position at a second velocity smaller than the first velocity.

3. The environment control system according to claim 1, wherein
air heated by a heater is blown from the outlet, and
after the angular velocity of the louver for the position determined by the determination means is set at a first velocity, if an amount of increase in a temperature at the position does not reach a threshold even after a reference period has elapsed, the control means sets the angular velocity of the louver for the position at a second velocity smaller than the first velocity.

4. The environment control system according to claim 1, wherein
air cooled by a cooler is blown from the outlet, and
the control means sets the angular velocity of the louver for the position determined by the determination means at a first velocity if a temperature at the position is lower than a reference temperature and sets the angular velocity of the louver for the position at a second velocity smaller than the first velocity if the temperature at the position is higher than the reference temperature.

5. The environment control system according to claim 1, wherein
air heated by a heater is blown from the outlet, and
the control means sets the angular velocity of the louver for the position determined by the determination means at a first velocity if a temperature at the position is higher than a reference temperature and sets the angular velocity of the louver for the position at a second velocity smaller than the first velocity if the temperature at the position is lower than the reference temperature.

6. An environment control system comprising:
a louver configured to change a direction of air blown from an outlet;
a motor configured to rotatively drive the louver;
a sensor configured to detect surface temperatures of objects existing in a particular area, the particular area divided into a plurality of detection areas;
determination means for determining the number of persons existing in each of the plurality of detection areas on a basis of data of the surface temperatures detected by the sensor; and
control means for controlling the motor in such a manner that an angular velocity of the louver becomes smaller as air from the outlet is blown toward a detection area farther from the outlet, if the same number of persons exists in each of the plurality of detection areas,
wherein the control means controls the motor in such a manner that, in each of the plurality of detection areas, the angular velocity of the louver becomes smaller as the number determined by the determination means is larger.

7. The environment control system according to claim 6, wherein
air cooled by a cooler is blown from the outlet,
the plurality of detection areas include a first detection area, and
after the angular velocity of the louver for the first detection area is set at a first velocity, if an amount of decrease in a temperature of a person in the first detection area does not reach a threshold even after a reference period has elapsed, the control means sets the angular velocity of the louver for the first detection area at a second velocity smaller than the first velocity.

8. The environment control system according to claim 6, wherein
air heated by a heater is blown from the outlet,
the plurality of detection areas include a first detection area, and
after the angular velocity of the louver for the first detection area is set at a first velocity, if an amount of increase in a temperature of a person in the first detection area does not reach a threshold even after a reference period has elapsed, the control means sets the angular velocity of the louver for the first detection area at a second velocity smaller than the first velocity.

9. The environment control system according to claim 6, wherein
air cooled by a cooler is blown from the outlet,
the plurality of detection areas include a first detection area, and
the control means sets the angular velocity of the louver for the first detection area at a first velocity if a temperature of a person in the first detection area is lower than a reference temperature and sets the angular velocity of the louver for the first detection area at a second velocity smaller than the first velocity if the temperature of the person in the first detection area is higher than the reference temperature.

10. The environment control system according to claim 6, wherein
air heated by a heater is blown from the outlet,
the plurality of detection areas include a first detection area, and
the control means sets the angular velocity of the louver for the first detection area at a first velocity if a temperature of a person in the first detection area is higher than a reference temperature and sets the angular velocity of the louver for the first detection area at a second velocity smaller than the first velocity if the temperature of the person in the first detection area is lower than the reference temperature.

11. An environment control system comprising:
a louver configured to change a direction of air blown from an outlet;
a motor configured to rotatively drive the louver;
determination means for determining a position of a person in a particular area on a basis of a wireless signal received from a mobile terminal; and
control means for controlling the motor in such a manner that an angular velocity of the louver becomes smaller as the position determined by the determination means is farther from the outlet when air from the outlet is blown toward the position.

12. An environment control system comprising:
a louver configured to change a direction of air blown from an outlet;
a motor configured to rotatively drive the louver;
determination means for determining the number of persons existing in each of a plurality of detection areas on a basis of wireless signals received from mobile terminals; and
control means for controlling the motor in such a manner that an angular velocity of the louver becomes smaller as air from the outlet is blown toward a detection area farther from the outlet, if the same number of persons exists in each of the plurality of detection areas,
wherein the control means controls the motor in such a manner that, in each of the plurality of detection areas, the angular velocity of the louver becomes smaller as the number determined by the determination means is larger.
